# EUROPEAN PATENT APPLICATION

(11) **EP 3 276 865 A1**
(43) Date of publication of application: **31.01.2018**
(21) Application number: 16290145.8
(22) Date of filing: 28.07.2016
(51) Int. Cl.: H04L 1/18

(54) **METHODS, DEVICES AND COMPUTER PROGRAMS FOR WIRELESS DATA TRANSMISSION IN A RADIO COMMUNICATIONS NETWORK**

(71) Applicant: ALCATEL LUCENT, 92100 Boulogne-Billancourt (FR)
(72) Inventor: Wild, Thorsten, 70435 Stuttgart (DE); Schaich, Frank, 70435 Stuttgart (DE)
(74) Representative: DREISS Patentanwälte PartG mbB

(57) **Abstract**

Method and device (610) for wireless data transmission in a radio communications network (600), the device (610) comprising at least a processor (611), memory (612) and a transceiver (613), and is configured to: transmit a first data package according to a first transmission time interval schedule, re-transmit a representation of the first data package, after transmitting the first data package for the first time, according to a second transmission time interval schedule, until a condition is met and without waiting for a receipt of a receiver's acknowledgement of the successful receipt of the first data package or the negative acknowledge of an unsuccessful receipt, transmit a second data package according to a third transmission time interval schedule, after transmitting the first data package for the first time, by superposing a first signal for re-transmitting symbols representing at least part of the first data package and a second signal for transmitting symbols representing at least part of the second data package to create a superposed signal, and send, if the condition is not met, the superposed signal at least once until the condition is met, wherein the first and second data package are addressed to the same recipient.

Method and device (620) for wireless data transmission in a radio communications network (600), the device (620) comprising at least a processor (621), memory (622) and a transceiver (623), and is configured to: receive a first data package according to a first transmission time interval schedule, receive at least one re-transmitted representation of the first data package, after receiving the first data package for the first time and according to a second transmission time interval schedule, send information about the result of the receipt of the fist data block, addressed to a sender (610) of the first data package, only upon successful receipt of the first data package, receive a superposed signal, comprising a first signal with symbols representing at least part of the retransmitted first data package, and a second signal with symbols representing at least part of a second data package, wherein the re-transmission of the first data package is received according to a second transmission time interval schedule, and wherein the second data package is received according to a third transmission time interval schedule, separate the first signal from the superposed signal, detect symbols representing at least a part of the re-transmitted first data package from the first signal, decode the detected symbols to recreate the first data package.

## Description

### Field of the invention

Embodiments relate to methods, devices and computer programs for wireless data transmission in a radio communications network.

### Background

This section introduces aspects that may be helpful in facilitating a better understanding of the invention(s). Accordingly, the statements of this section are to be read in this light and are not to be understood as admissions about what is in the prior art or what is not in the prior art.

Demands for increasing the throughput of communication systems are steadily increasing, as well as new services and use cases are targeted to be supported. One important use case for communication systems is mission critical communication, MCC, also known as ultra-reliable low latency communication, URLLC. MCC incorporates services characterized by high reliability and low latency. Examples are cyber-physical systems, e.g. industry 4.0 control loops, remote controlling of objects, or traffic-safety applications.

MCC shall provide both, high reliability, e.g. packet error rates of 10⁻⁸, in conjunction with low latency, e.g. 1 ms end-to-end latency, which are typically contradicting targets.

Mobile communication systems used to implement MCC are for example General Packet Radio Service, GPRS, Universal Mobile Telecommunications System, UMTS, Long Term Evolution, LTE, or 5^{th}-generation mobile communication systems, 5G.

Such mobile communication systems, e.g. LTE or 5G, may comprise a control plane and a user plane. The control plane handles radio-specific administrative functionality, e.g. Radio Resource Control, RRC, for assigning radio resources for transmission, or the paging of mobile transceivers to determine their location or their associated base station transceiver in the mobile communication system. The user plane handles the transfer of user data, e.g. Internet Protocol-packages or calls.

Control loops for cyber-physical systems in MCC scenarios, which may be a wireless replacement for existing industrial wireline bus systems for automation, production and robotic systems, may have periodic traffic with e.g. one packet each millisecond. In MCC scenarios a resource pre-reservation is used to reduce the signaling in the control plane. The pre-reservation can e.g. make use of semi-persistent scheduling functionalities. A transmission time interval, TTI, according to a transmission schedule may be used for transmitting packets. This requires less signaling for resource allocation, e.g. by sending uplink, UL grants, or downlink, DL grants. This means radio resources not required for signaling may be used for transmitting packets in the user plane.

To achieve high reliability with respect to low packet error rates, hybrid automated repeat request, HARQ, retransmissions may be implemented. However, this causes delay due to the round trip times, RTT, of data transmission, negative-acknowledgement, NACK, retransmission, negative-acknowledgement, NACK, second retransmission.

### Summary

It is an object of the present invention to provide improved methods, improved devices and corresponding computer programs for wireless data transmission in a radio communications network transmitting data packages, e.g. user plane data such as data packets, and having reduced resource consumption in the control plane.

Regarding the abovementioned methods, this objective is achieved by transmitting a first data package according to a first transmission time interval schedule, retransmitting a representation of the first data package, after transmitting the first data package for the first time, according to a second transmission time interval schedule, until a condition is met and without waiting for a receipt of a receiver's acknowledgement of the successful receipt of the first data package or the negative acknowledge of an unsuccessful receipt, further comprising transmitting a second data package according to a third transmission time interval schedule, after transmitting the first data package for the first time, by superposing, if the condition is not met, a first signal for retransmitting symbols representing at least a part of the first data package and a second signal for transmitting symbols representing at least a part of the second data package to create a superposed signal, and sending the superposed signal at least once until the condition is met, wherein the first and the second data package are addressed to the same recipient. This allows an overlap for retransmission of the first data package and first transmission or retransmission of the second data package in the same TTI.

Preferably the condition is met, when a time interval after transmitting the first data package for the first time passed, or the receipt of a receiver's acknowledgement of the successful receipt of the first data package is detected, whatever condition is met earlier. This defines as a retransmission end time limit the receipt of the receiver's acknowledgement, or a number of TTIs of predetermined length for continuous HARQ retransmission, after which the UE stops the continuous retransmissions.

Preferably the first signal has a first power level and the second signal has a second power level. Advantageously, the predetermined first power level is between 1 dB and 10 dB, and in particular 1 dB, 3 dB or 10dB higher than the predetermined second power level. The levels of the first and second power levels can be adjusted dynamically, e.g. dependent on the actual signal-to-noise ratio of the current radio channels, the available bandwidths, the actual traffic load of the channel, or else, and configured shortly before transmission. The higher first power level of the first signal is detectable well in the superposed signal and hence the first signal is separable from the second signal by a demodulation process. When detecting the first signal the receiver may treat the second signal as noise.

Preferably the data symbols for transmitting the first data package, retransmitting the first data package or transmitting the second data package are encoded with a Fountain code, a linear time encoding code or a Raptor code. These codes provide advantages, because the probability of being able to decode a received message increases rapidly when the number of symbols received is above a characteristic number of symbols.

Preferably the first data package is sent in a first transmission time interval and the second data package is sent in a second transmission time interval, wherein retransmission of the first data package starts between the first transmission time interval and the second transmission time interval. This way the signalling of non-acknowledgement in the control plane is not required.

Preferably a content of a control message is determined to comprise at least one of:
Information related to a superposition start time limit,
Information related to a retransmission end time limit,
Information related to a power-allocation for a transmission and/or re-transmission signal,
Information related to a modulation and coding scheme,
Instruction to re-transmit a data package identical to the original package or to re-transmit a redundancy version of the original package. The representation of the first data package is retransmitted dependent on at least one of the received information. The re-transmission is easily controllable this way.

Regarding the abovementioned methods, this objective is further achieved by receiving a first data package according to a first transmission time interval schedule, and receiving at least one re-transmitted representation of the first data package, after receiving the first data package for the first time and according to a second transmission time interval schedule, sending information about the result of the receipt of the first data package, addressed to a sender of the first data package, only upon successful receipt of the first data package, receiving a superposed signal, comprising a first signal with symbols representing at least part of the re-transmitted first data package, and a second signal with symbols representing at least part of a second data package, wherein the re-transmission of the first data package is received according to the second transmission time interval schedule, and wherein the second data package is received according to a third transmission time interval schedule, separating the first signal from the superposed signal, detecting symbols representing at least a part of the retransmitted first data package from the first signal, decoding the detected symbols to recreate the first data package. This way the control plane signalling is reduced, as no negative-acknowledgement, NACK, is sent before retransmission. The eNodeB recreates this way the first data package from the symbols of the first signal. Additionally the second data packages may be recreated from the symbols of the second signal. When a retransmission of the first data package is required, this may overlap with the transmission of the second data package or a retransmission of the second data package. Thereby the transmission schedules may trigger sending in the same TTIs.

Preferably the first signal has a first power level and the second signal has a second power level. Advantageously the first signal is separated from the superposed signal depending on the power level of the first signal and/or the power level of the second signal, or a combination thereof, and the first power level is between 1 dB and 10 dB, in particular 1 dB, 3 dB or 10 dB higher than the second power level. Different power levels are easily distinguishable in the eNodeB. This provides an effective and robust implementation.

Preferably received symbols of the first data package, or of the superposed first data package and second data package are intermediately stored in a buffer as candidates for supporting a subsequent decoding of the first data package and/or the second data package. This improves speed of the detection of the first data package and allows a detection of the second data package in later processing.

Preferably symbols stored in the buffer are processed to remove the first signal from the superposed signal by interference cancellation and the second data package is detected from a signal resulting from the signal cancellation. This improves speed of the detection of the second data package.

Preferably symbols from a plurality of past transmission time intervals are stored in the buffer and used to detect the second signal. Signal detection is improved further this way.

Preferably the method comprises receiving a mission critical service request related to a packet delay budget, in particular of 1 ms, 5 ms, or 10 ms, or a value between 1 ms and 10 ms, and/or a packet error loss rate, in particular of 10⁻⁸, 10⁻⁷ or 10⁻⁶, and/or a predetermined priority level of 0.5 or 0.7 or 1.0 or a value in-between 0 and 2, and allocating resources for transmitting data in the radio communications network depending on the received service request requirements. Resources for wirelessly receiving data are allocated in the radio communications network depending on the received request. This allows configuration based on requirements of mission critical services.

Preferably a control message is determined comprising at least one of:
Information related to a superposition start time limit,
Information related to a retransmission end time limit,
Information related to a power-allocation for a transmission and/or re-transmission signal,
Information related to a modulation and coding scheme,
Instruction to re-transmit a data package identical to the original package or to re-transmit a redundancy version of the original package. The control message is sent addressed to one user equipment. The re-transmission is easily controllable this way.

Regarding the abovementioned devices, this objective is further achieved by a device, e.g. the user equipment, for wireless data transmission in the radio communications network, wherein the device comprises at least a processor, memory and a transceiver, and is configured to transmit a first data package according to a first transmission time interval schedule, re-transmit a representation of the first data package, after transmitting the first data package for the first time, according to a second transmission time interval schedule, until a condition is met and without waiting for a receipt of a receiver's acknowledgement of the successful receipt of the first data package or the negative acknowledge of an unsuccessful receipt, transmit a second data package according to a third transmission time interval schedule, after transmitting the first data package for the first time, by superposing a first signal for re-transmitting symbols representing at least part of the first data package and a second signal for transmitting symbols representing at least part of the second data package to create a superposed signal, and send, if the condition is not met, the superposed signal at least once until the condition is met, wherein the first and second data package are addressed to the same recipient.

Preferably the device is further configured to determine a control message comprising at least one of:
Information related to a superposition start time limit,
Information related to a retransmission end time limit,
Information related to a power-allocation for a transmission and/or re-transmission signal,
Information related to a modulation and coding scheme,
Instruction to re-transmit a data package identical to the original package or to re-transmit a redundancy version of the original package, and adapted to re-transmit the representation of the first data package dependent on at least one of the received information.

Regarding the abovementioned devices, this objective is further achieved by another device, e.g. the eNodeB, for wireless data transmission in the radio communications network, wherein the other device comprises at least another processor, another memory and another transceiver, and is configured to receive a first data package according to a first transmission time interval schedule, receive at least one re-transmitted representation of the first data package, after receiving the first data package for the first time and according to a second transmission time interval schedule, send information about the result of the receipt of the fist data block, addressed to a sender of the first data package, only upon successful receipt of the first data package, receive a superposed signal, comprising a first signal with symbols representing at least part of the retransmitted first data package, and a second signal with symbols representing at least part of a second data package, wherein the re-transmission of the first data package is received according to the second transmission time interval schedule, and wherein the second data package is received according to the third transmission time interval schedule, separate the first signal from the superposed signal, detect symbols representing at least a part of the re-transmitted first data package from the first signal, decode the detected symbols to recreate the first data package.

Preferably the device is configured to determine the content of a control message comprising at least one of:
A superposition start time limit,
A re-transmission end time limit,
Information related to power-allocation for a transmission and/or re-transmission signal,
Information related to a modulation and coding scheme,
Instruction to re-transmission a package identical to the original package or to re-transmit a redundancy version of the original package.

### Brief description of the figures

Some other features or aspects will be described using the following non-limiting embodiments of devices or methods or computer programs or computer program products by way of example only, and with reference to the accompanying figures, in which:
- Fig. 1: schematically depicts a re-transmission scheme time flow,
- Fig. 2: schematically depicts a simplified flow-chart of a method according to the embodiments,
- Fig. 3: schematically depicts a simplified flow-chart of another method according to the embodiments,
- Fig. 4: schematically depicts another retransmission scheme time flow,
- Fig. 5: schematically depicts a further retransmission scheme time flow, and
- Fig. 6: schematically depicts parts of devices according to the embodiments.

### Description of the embodiments

Mobile communication systems being used to implement mission critical communication, MCC, require high reliability and low latency data transmission. To achieve high reliability with respect to low packet error rates, hybrid automated repeat request, HARQ, retransmissions may be implemented in such systems. However, this causes delay due to the round trip times, RTT, of data transmission, negative-acknowledgement, NACK, retransmission, negative-acknowledgement, NACK, second retransmission and further repetitions until a data transmission ends successfully.

Transmitting data packages in this context refers to transmitting e.g. user plane data such as data packets. A data package or a part of a data package is sent in a radio frame. A radio frame is sent for example using the Universal Terrestrial Radio Access Network, UTRAN, of 3GPP Long Term Evolution using Orthogonal Frequency Division Multiplexing, OFDM in the downlink and Single Carrier Frequency Division Multiple Access, SC-FDMA, in the uplink. A radio frame comprises at least one symbol, in particular an OFDM or a SC-FDMA symbol, and is transmitted in a transmission time interval, TTI. In time division duplex each TTI for transmission is pre-configured for downlink for uplink or to be switched from downlink to uplink. LTE supports 7 different TDD patterns which offer uplink / downlink ratios from approximately 60:40 to 10:90 within 10 successive TTIs according to TS 36.211 V13.1.0 (2016-04).

In the following description a transmission time interval index, TTI index, is used to reference a specific TTI in the sequential order over time of TTIs, e.g. starting at index One. In the following description a transmission time interval schedule defines which of the TTIs is used for sending a specific data package. The transmission time interval schedule in the example references the respective TTI index. The transmission time interval schedule may also be a definition of the start time and end time, start time and duration, or end time and duration of respective transmission time intervals used for transmitting a data package.

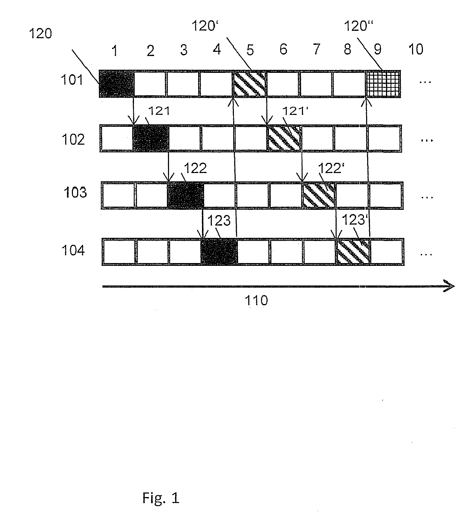

Fig. 1 schematically depicts a corresponding re-transmission scheme time flow 110 over the transmission time intervals TTI.

As depicted in Fig. 1, at least one transmission time interval, TTI, is in this scenario consumed by one of the following steps:
- Forward data transmission, 101,
- Forward processing, feedback processing and waiting for the next feedback TTI, 102,
- Feedback transmission of ACK/NACK, 103,
- Feedback processing, re-transmission forward processing and waiting for the next forward TTI, 104.

At a leftmost TTI index 1 a first data packet is transmitted in a TTI 120 in a pre-reserved resource block. This corresponds to the step forward data transmission, 101. Then, at a TTI index 2, the first data packet is processed in a TTI 121. This corresponds to the step forward processing, feedback processing and waiting for the next feedback TTI, 102. Then, at a TTI index 3, feedback for the first data packet is transmitted in a TTI 122 in a pre-reserved resource block. This corresponds to the step Feedback transmission of ACK/NACK, 103. Then at a TTI index 4, the feedback for the first data packet 120 is processed in a TTI 123. This corresponds to the step feedback processing, re-transmission forward processing and waiting for the next TTI, 104. Likewise in an exemplary LTE system acknowledgment, ACK, or negative acknowledgement, NACK, would be received after 2 TTIs. The re-transmission would occur in the third TTI in that case.

In a similar manner, in TTIs 120', 121', 122', 123' that follow in consecutive TTI indices 5, 6, 7, 8 respectively after the TTI index 4, a first retransmission data packet corresponding to the first data packet 120 is transmitted and processed as described for the first data packet 120. The start of a second retransmission is depicted in Fig. 1 in TTI 120'' in TTI index 9 that follows TTI index 8. Likewise further transmission and retransmission of a second data packet and may be implemented.

This means with the data transmission of the first data package happening in TTI 1, the 1st / 2nd / 3rd retransmissions happen in TTI 5/9/13. The TTI length cannot be designed arbitrary small, due to a requirement for suiting channel multi-path delay spreads, sufficient number of data symbols, pilot symbols etc. Therefore a system with aforementioned HARQ design cannot afford many retransmissions when a tight latency requirement is enforced.

For communication systems the mission critical communication, MMC, may therefore be constrained to e.g. a single retransmission. This only offers a single additional source of time diversity, i.e. one TTI, for enhancing the reliability.

For MCC the residual packet error rate has to be very low in general. In order to meet this with e.g. only one TTI for retransmission, the link adaptation, thus the choice of modulation and coding scheme, MCS, has to be very conservative, which is costly in terms of radio resources. This leads to poor spectral efficiency.

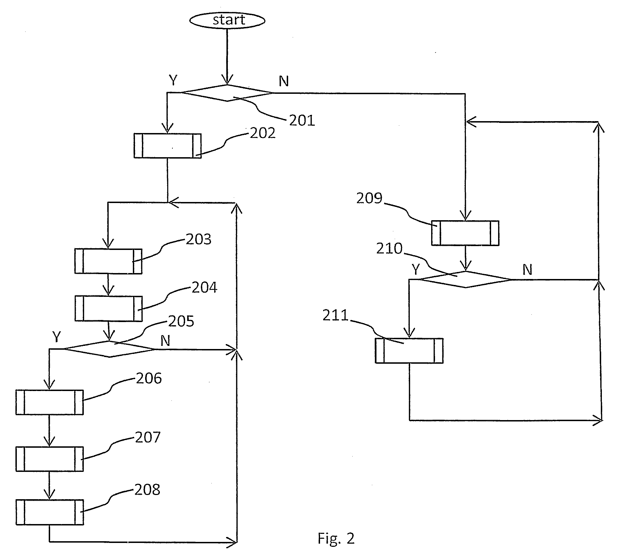

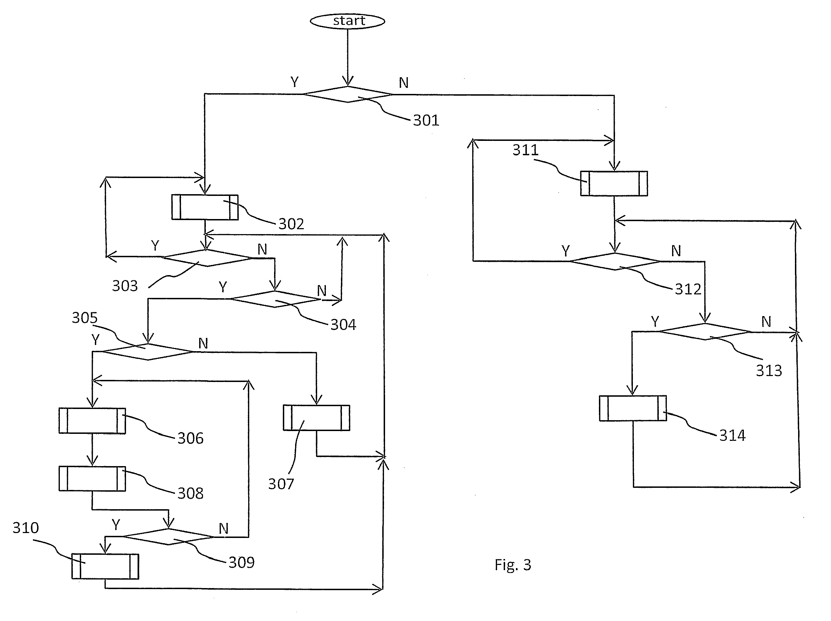

An improved method for wireless data transmission is explained below for an uplink of an user equipment UE connectable to an eNodeB referencing figures 2 and 3. The method however applies to both, uplink and downlink of a radio communications network. The method improves in particular data transmission depending on mission critical service requests requirements.

The method may use resource pre-reservation, e.g. including transmission with a frequency hopping pattern. Radio transmissions may be using Fountain codes or Raptor codes as for example disclosed in A. Shokrollahi, "Raptor codes," in IEEE Transactions on Information Theory, vol. 52, no. 6, pp. 2551-2567, June 2006.

The transmission and retransmission of data packets of a data package is in the example continued until an acknowledgement, e.g. a HARQ ACK is received for the data package. Alternatively after a data packet is sent in a first TTI, this TTI is interpreted as initial transmission. The subsequent retransmission may in this case be processed with classical incremental redundancy principles according to the 3GPP Long Term Evolution or the like.

In any case the retransmission according to the method described below is already executed without waiting for a negative acknowledgement, e.g. a HARQ NACK. In other words, the retransmission is started without waiting for a receipt of a receiver's acknowledge of a successful receipt of the first data package, or the negative-acknowledge of an unsuccessful receipt.

Furthermore the number of retransmissions may be bound according to a deadline instead of a fixed or preconfigured number of retransmissions.

Additionally, as described below, the radio link may be adapted depending for example on the fact that already several retransmitted data packages of a data block, or corresponding Fountain or Raptor code blocks or segments are available at a receiver. In this case, the radio resource consumption can be adjusted as follows:
- In case of periodic MCC traffic, unused pre-reserved resource blocks can be freed for best effort traffic, either for background services or for other users. Freeing resources refers to radio resources thus time-frequency resources like physical resource blocks, PRBs, are unused as the retransmission is not needed anymore. Therefore other data traffic can be handled via the freed PRBs which e.g. where allocated via semi-persistent scheduling, SPS.
- In case that the retransmission, the Fountain code transmission or the Raptor code transmission is still ongoing, i.e. an ACK is not yet received, and pre-reservation resources are limited, the sender may use superposition.

In this context, superposition means that the sender transmits a single signal. The signal comprises of a first signal and a second signal. The first signal is preferably a signal of higher power than the second signal. The power allocation is tailored to the used MCS preferably in a way to allow the receiver treating the low power signal as noise, e.g. with a quadrature phase shift keying modulation and coding scheme, QPSK MCS. The power difference between the first signal and the second signal is for example approximately 10 dB.

The first signal is for transmitting symbols or retransmitting symbols representing at least a part of a first data package and the second signal is for transmitting symbols representing at least a part of a second data package. Once the first data package is received, the second signal becomes the first signal to send the second data package, and a third data package may be processed in the second signal accordingly.

When the receipt of the first data package is not acknowledged before the third data package is to be sent, a superposed signal may include as first signal a signal created as the sum of the previously mentioned first and second signals or generally the sum of all signals of ongoing retransmissions. The second signal is in that case used for sending the third data package.

The receiver may use the retransmission for additional incremental redundancy for decoding previously received data.

Once the first data packet in the first signal has been decoded successfully, the receiver may use a buffered copy of the superposed signal from current and past TTIs to apply interference cancellation on it, subtract the reconstructed first data packet and start to decode the second data packet.

This allows transmission of parts of the second data package and the retransmission of parts of the first data package on the same radio resources. This makes pre-reservation better predictable.

Alternatively the second signal is treated as noise.

To set up the eNodeB and the UE the scheduler of the eNodeB pre-reserves the respective Physical Resource Blocks, PRBs, for a continuous retransmission as described above.

This may be based on the semi-persistent scheduling functionality, where the periodicity is configured in advance by already existing LTE RRC signaling. Activation and deactivation of the continuous retransmission resources may happen by indication via the physical downlink common control channel, PDCCH, according to e.g. 3GPP TS 36.211 V12.6.0 (2015-06) or more recent versions, based on the semi-persistent radio network temporary identifier, SPS-RNTI.

To this end a new RRC message or new parameters for existing RRC messages may be added to e.g. the RRC messages according to the LTE standard described in sections 6.2, 6.2.1 and 6.2.2 of 3GPP TS 36.331 V12.7.0 (2015-09) or more recent versions.

The continuous retransmission configuration of the UE is triggered in the example by sending a new RRCConnectionReconfiguration message to UE.

The RRCConnectionReconfiguration message has for example the following new content:
(1) Superposition start time limit: The number of TTIs for continuous retransmission, e.g. a first data package after which the UE starts superimposing the ongoing retransmissions of a second data package with a new initial data transmission.
   The superposition start time limit is for example information about the start time or index of the TTI that shall be used for transmitting the second data package while the first data package is still re-transmitted. The first data package is transmitted according to a first transmission time interval schedule. A representation of the first data package is retransmitted according to a second transmission time interval schedule. The second data package is for example transmitted according to a third transmission time interval schedule. The superposition start time limit is for example the start time or the index of a TTI that would be used according to the second transmission time interval schedule and the third transmission time interval schedule. In the example re-transmission occur according to the second transmission time interval schedule in every TTI after the first transmission of a data package. In the example first transmissions of the second data package occurs according to the third transmission time interval schedule in the 9^{th} TTI. This means that after the first transmission of the first data package according to the first transmission time interval schedule, 8 TTIs are available for re-transmission before a superposition is required. Hence the superposition start time limit indicates for example to start 8 ms after first transmission, assuming a TTI length of 1 ms.
(2) Retransmission end time limit: The number of TTIs for continuous retransmission, after which the UE stops the continuous retransmissions.
   The retransmission end time limit specifies for example a number of consecutive TTIs to be used for the re-transmission. This defines a time interval for re-transmission after transmitting the first data package the first time. As an example, the retransmission end time limit specifies that the UE shall stop retransmissions after three attempts. When the second transmission time interval schedule specifies retransmissions in every TTI, this means that three consecutive TTIs are used for re-transmission after the corresponding data package was sent the first time.
(3) Power-allocation or MCS allocation related information, e.g. the power splitting ratio of retransmission and new data transmission. This may be also implicit information like a pointer to a predefined modulation and coding scheme table known at both ends of the link and a certain offset.
(4) Redundancy version information, e.g. to indicate incremental redundancy, chase combining etc.

In the example the eNodeB, upon receipt of a Connection request, e.g. a RRCConnectionRequest message, from the UE, determines a control message e.g. the RRCConnectionReconfiguration message.

The control message in general comprises at least one of:
Information related to a superposition start time limit,
Information related to a retransmission end time limit,
Information related to power-allocation for a transmission and/or re-transmission signal,
Information related to a modulation and coding scheme
Instruction to re-transmit a representation of a package identical to the original package or to re-transmit a redundancy version of the original package.

Re-transmitting a representation of the first data package includes re-transmitting a package identical to the original package, e.g. a copy of the first data package, or to re-transmit a redundancy version of the original package, or else.

Accordingly the eNodeB sends the control message addressed to the UE.

The UE, upon receipt of this control message, determines the content of the control message, e.g. detects and processes the information included in the control message, and is thus configured for transmitting or retransmitting data packages accordingly.

Accordingly, for downlink transmissions of data from the eNB to the UE, the eNB determines the content of the control message, or the content is generated outside the eNB, e.g. in the MME (mobility Management Entity) and send to the eNB. Then the eNB generates the control message and transmits it to the UE prior to transmitting data.

In particular depending on the content of the control message:
The retransmission of the representation of the first data package is superposed with the transmission of the second data package or a retransmission of a representation of the second data package, when the superposition start time limit is reached.

Any retransmission of a particular data package ends if the retransmission end time limit is reached.

The power of the first signal and the second signal is adjusted according to the information related to power-allocation before superposition.

The modulation and coding scheme is selected according to the corresponding received information.

Either an identical package or only a redundancy version of the original packet is retransmitted, according to the corresponding received instruction.

A default configuration of the UE may be defined and used for the aforementioned configuration, in case the control message is not received or does not specify all of the information.

In case the control message is not received, a negative acknowledgement, e.g. a HARQ NACK, may be sent to the eNodeB by UE.

Upon successful receipt of the RRCConnectionReconfiguration message UE may send an acknowledgement, e.g. a HARQ ACK, to eNodeB.

Upon receipt of a negative acknowledgement, e.g. a HARQ NACK from the UE, eNodeB may retransmit the control message, e.g. the RRCConnectionReconfiguration.

Afterwards the UE starts transmitting data packages in user plane according to the first transmit time interval schedule. Accordingly a first data package is sent and for example after waiting three TTIs, a second data package is sent.

Additionally, the UE starts retransmitting a representation of the first data package according to the second transmission time interval schedule. In the example the representation of the first data package is retransmitted in every consecutive TTI after sending the first data package for the first time. The re-transmission is either the package identical to the original package or a redundancy version of the original package.

In case the first data package is received by the eNodeB successfully, the eNodeB sends a corresponding acknowledgement, e.g. HARQ ACK, on the control plane. For unsuccessful reception, no negative acknowledgement is sent.

If an acknowledgement is received, UE stops transmitting or re-transmitting the corresponding data package.

If the superposition start time limit is reached, UE starts superposing the signals. The power-allocation for the transmission and re-transmission signal is adjusted as described above.

If the retransmission end time limit is reached for a particular re-transmission, this retransmission is stopped by UE.

Accordingly, in the method of Fig. 2, in an eNodeB for uplink data transmission after the start, a step 201 is executed.

It is assumed that the UE is connected to the eNodeB in a Radio Resource Control connected state, RRC connected state. The RRC connected state is in the example defined as in section 7.2 of 3GPP TS 36.300 V12.7.0.

After the start a step 201 a test is performed to determine if sufficient radio resources are available for the respective connection. If insufficient radio resources are available, an optional step 202 is executed. Otherwise a step 209 is executed. This step is optional. If step 201 is not executed, step 202 is executed after the start.

In step 202, the radio resources are set up.

In particular in an exemplary extension of the standard described in 3GPP TS 23.203 V12.11.0 (2015-12) a new quality of service class indicator, QCI, for URLLC is hence defined for specifying the respective service level requirements. These requirements are related to the latency tolerated by MCC, required packet error rates or priority level for the MCC.

However, the existing QCI definitions for MCC may not be sufficient for newly arising use cases, because the listed packet delay budget in existing LTE QCIs for URLLC is not sufficient for the scope of 5G ultra-low-latency services according to Recommendation ITU-R M.2083 (09-2015): IMT Vision - "Framework and overall objectives of the future development of IMT for 2020 and beyond".

For example the packet delay budget has to be reduced to e.g. 10 ms or below. The same holds for the listed packet error loss rate for ultra-high reliability services, which has to be reduced to 10⁻⁷ or even below. Additionally, for periodic traffic, the periodic nature of the service, e.g. one packet transmission each 10 ms, may be indicated as well.

This means, one or more additional QCI entries are required for 5G purposes.

Table 6.1.7 of 3GPP TS 23.203 V12.11.0 and more recent versions already include some QCI for URLLC, denoted "Mission Critical Data". This is depicted in Table 1.

**Table 1**

| QCI | Resource Type | Priority Level | Packet Delay Budget | Packet Error Loss Rate (Note 2) | Example Services |
|---|---|---|---|---|---|
| 65 (NOTE 3 NOTE 9 NOTE 12) | | 0.7 | 75ms (NOTE 7 NOTE 8) | 10⁻⁷ | Mission Critical user plane Push to Talk voice (e.g. MCPTT) |
| 69 (NOTE 3 NOTE 9 NOTE 12) | | 0,5 | 60ms (NOTE 7, NOTE 8) | 10⁻⁶ | Mission Critical delay sensitive signaling (e.g. MCPTT signaling) |
| 70 (NOTE 4 NOTE 12) | | 5, 5 | 200ms (NOTE 7, NOTE 10) | 10⁻⁶ | Mission Critical Data (e.g. example services are the same as QCI 6/8/9) |

Table 6.1.7 of 3GPP TS 23.203 V12.11.0 is e.g. expanded in the following way:
One or more additional new QCI entries for Mission Critical Data are e.g. appended to Table 1 with a Packet Delay Budget of e.g. 1 ms, 5 ms, or 10 ms, or a value between 1 ms and 10 ms, and a Packet Error Loss Rate of e.g. 10⁻⁸, 10⁻⁷ or 10⁻⁶. Additionally a respective suitable QCI number and priority level is set. The priority level is for example set to 0.5 or 0.7 or 1.0 or a value in-between 0 and 2.

Examples services for the one or more additional new QCI are cyber-physical systems, e.g. industry 4.0 control loops, remote controlling of objects, or traffic-safety applications.

A new QCI for URLLC is for example assigned when the Evolved Packet System bearer, EPS bearer, is set up.

After step 201 or if the eNodeB is set up, after step 202 a step 203 is executed.

In step 203, in particular if a superposed signal is received, the first signal is separated from the superposed signal. Receiving a superposed signal is relevant for example for receiving at least one re-transmitted representation of the first data package, after receiving the first data package for the first time. The re-transmission is according to the second transmission time interval schedule. The transmission of the second data package is according to the third transmission time interval schedule. Preferably the first signal and the second signal are separated from the superposed signal. The power level may be used for the separation. Another optional source of separation could be spreading or strong channel coding or different interleavers. Alternatively the second signal may be considered as noise. Separation could thus include active separation by extraction, filtering considering the second signal, etc., or inherent separation by noise filtering.

After step 203 a step 204 is executed.

In step 204, symbols representing at least a part of the retransmitted first data package are detected from the first signal. Preferably received symbols of first data pack, or of the first data pack and second data pack are intermediately stored in a buffer as candidates for the first and second data package for supporting a subsequent decoding of the first data package and/or the second data package or later processing.

Afterwards in a step 205 a test is performed to determine if the first data packet can successfully be decoded. This may be indicated by e.g. a CRC check of the data available as candidate for the first data packet in the buffer.

If the decoding can be performed successfully, a step 206 is executed. Otherwise step 203 is executed.

In step 206 the first data packet is decoded from the symbols and an acknowledgement, e.g. an HARQ ACK, is sent to UE, e.g. via the Physical Hybrid-ARQ Indicator Channel, PHICH. The first data packet, or the first data packet and a second data packet may be decoded and stored in a buffer for later processing.

In an optional step 207, that follows step 206, successive interference cancellation, SIC, may be used in case a superposed signal has been received and its data packets have been stored in the buffer. This may include data of several past TTIs, stored in a buffer which now may benefit from interference cancellation of the first data signal in order to detect the second data signal.

This way, components of the first data packet having been retransmitted together with components of the second data packet are removed and the symbols of the second data packet are made available.

In optional step 208, that follows step 207, any available symbols of the second data packet are decoded including any available corresponding retransmissions of symbols of the second data packet. This way the second data packet may be reconstructed.

Afterwards or, when the optional steps are omitted, after step 206, the step 203 is executed.

For example with 1/8 ms TTI length and 1 ms round trip time, RTT, 7 retransmissions are available without superposition, while conventional HARQ would only allow for a single retransmission. Additional retransmissions are available with superposition.

If sufficient radio resources are detected, in step 201, the step 209 is executed. This means that for example for MCC, the transmission time interval schedules are used to transmit data packages and to retransmit them without superposition. The respective schedules are designed to have no overlapping TTI usage as described below. E.g., avoiding the overlapping could be handled in the following way: the allocated semi-persistently scheduled resources are for a first time interval exclusively used for the first transmission and all retransmissions which are possible without overlap and then for a second time interval exclusively used for the second transmission and all its corresponding retransmission. In case the first transmission cannot be successfully decoded within the first time interval, the base station allocates further scheduled resources, indicated by downlink control signalling, which will be used for ongoing continuous retransmissions of the first transmission, as long as the data can be successfully decoded and an ACK has been sent.

For example with 1/8 ms TTI length and 1 ms round trip time, RTT, still 7 retransmissions are available, while conventional HARQ would only allow for a single retransmission.

In step 209, a signal comprising symbols of the first data package is received and corresponding data is stored in an input buffer as candidate for the first data packet.

Afterwards a step 210 is executed.

In step 210 a test is performed to determine if the first data packet can be decoded successfully. For example a CRC check is performed on the data available as candidate for the first data packet. If the first data packet can be decoded successfully, a step 211 is executed. Otherwise step 209 is executed.

In step 211 the first data packet is decoded and an acknowledgement, e.g. a HARQ ACK, is sent to UE via the PHICH. Detected symbols are decoded for example to recreate the first data packet e.g. using chase combining or incremental redundancy techniques.

Afterwards step 209 is executed.

The example describes the uplink from UE to the eNodeB. The principles apply to the downlink from the eNodeB to the UE as well.

In the UE a corresponding method is implemented for uplink or downlink. The method for uplink is described below. The principles apply to the downlink as well. The method in the UE may comprise monitoring the PDCCH according to e.g. 3GPP TS 36.211 V12.6.0 using the Semi-Persistent Scheduling Cell Radio Network Temporary Identifier, SPS-CRNTI, for descrambling its semi-persistent scheduling information. Once UE detects that its Semi-Persistent Scheduling resources, SPS resources, are activated it starts to transmit in the uplink the actual data and a continuous flow of retransmissions, until it receives an acknowledgement, ACK, by the eNodeB via the PHICH. In case the re-transmission time limit specified above is exceeded, UE stops retransmissions.

Accordingly, in the method of Fig. 3, after the start, a step 301 is executed.

It is assumed that the UE is connected to the eNodeB in a Radio Resource Control connected state, RRC connected state. The RRC connected state is in the example defined as in section 7.2 of 3GPP TS 36.300 V12.7.0 (2015-09) or more recent versions.

The UE may send data to eNodeB for monitoring the channel quality, CQI, e.g. for use in UL sounding according to e.g. section 8.2 of 3GPP TS 36.213 V12.6.0 (2015-06) or more recent versions, or it sends the relevant information via measurement reports in UL.

In step 301 a test is performed to determine if sufficient radio resources are available for the respective connection. If insufficient radio resources are detected, a step 302 is executed. Otherwise a step 311 is executed. This step is optional. If step 301 is not executed, step 302 is executed after the start.

In step 302, an uplink data packet, e.g. the first data packet, is sent in a first TTI e.g. using a corresponding radio resource block to the eNodeB. This means coding of the first data packet with symbols for transmitting in in a single signal.

Afterwards a step 303 is executed.

In step 303 a test is performed to determine if an acknowledgement, ACK, for the first data packet has been received from the eNodeB. If the acknowledgement has been received, the step 302 is executed to transmit new data according to the semi-persistent schedule. Otherwise a step 304 is executed.

In step 304 a test is performed to determine if a predetermined re-transmit timer condition is met. This condition is for example met, if the second transmission time interval schedule indicates the start of a TTI for retransmission after the first TTI. Preferably the condition is met if a time interval after transmitting the first data package for the first time passed, or the receipt of a receiver's acknowledgement of the successful receipt of the first data package is detected, whatever condition is met earlier.

Afterwards a step 305 is executed if the condition is met. Otherwise the step 303 is executed.

In step 305 a test is performed, to determine if a transmit timer condition for a further uplink data packet, e.g. the second data packet is met. This condition is for example met, if the third transmission time interval schedule indicates the start of a TTI for transmitting the second data packet for the first time. This means that the second data package is sent according to the third transmission time interval schedule, after transmitting the first data package for the first time. If this condition is met a step 306 is executed. Otherwise a step 307 is executed.

In step 307, a representation of the first data packet is re-transmitted according to the second transmission time interval schedule without waiting for a receipt of a receiver's acknowledgement of the successful receipt of the first data package or the negative acknowledge of an unsuccessful receipt. Afterwards the step 303 is executed.

In step 306, both, the first data packet and the second data packet, are coded in symbols in two distinct signals. The two signals are superposed into one superposed signal. The first signal may have a higher power than the second signal as described above.

Afterwards a step 308 is executed.

In step 308, the superposed signal is sent to the eNodeB. Preferably the superposed signal is sent, if the condition is not met, to the eNodeB at least once until the condition is met, wherein the first and the second data package are addressed to the same recipient.

Afterwards a step 309 is executed.

In step 309 a test is performed to determine if an acknowledgement, ACK, for the first data packet or for the second data packet has been received from the eNodeB. If the acknowledgement has been received, a step 310 is executed. Otherwise the step 306 is executed.

In step 310, only the data packet of the first data packet or the second data packet is re-transmitted, for that no acknowledgment, ACK, has been received yet. Afterwards the step 303 is executed. In case the first data packet has been received, the first signal is substituted for the second signal.

In step 311, an uplink data packet, e.g. the first data packet, is sent in a first TTI to the eNodeB. This means the first data packet is coded with symbols for transmitting in a single signal.

Afterwards a step 312 is executed.

In step 312 a test is performed to determine if an acknowledgement, ACK, for the first data packet has been received from the eNodeB. If the acknowledgement has been received, the step 311 is executed. Otherwise a step 313 is executed.

In step 313 a test is performed to determine if a predetermined re-transmit timer condition is met. This condition is for example met, if the second transmission time interval schedule indicates the start of a TTI for retransmission after the first TTI.

In step 314, a representation of the first data packet is re-transmitted if the re-transmit timer condition of step 313 is met and without waiting for a receipt of a receiver's acknowledgement of the successful receipt of the first data package or the negative acknowledge of an unsuccessful receipt. Afterwards the step 312 is executed.

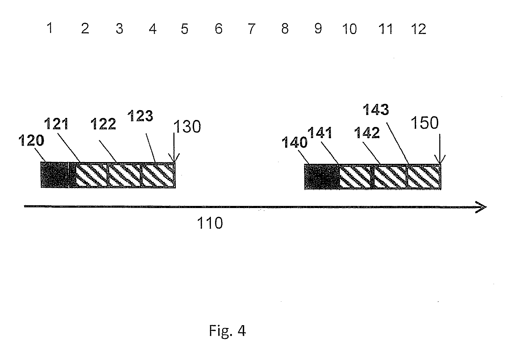

Fig. 4 schematically depicts a retransmission scheme time flow 110 when no superposed signal is used.

In Fig. 4 along TTI indices 1 to 12 the first data packet 120 is sent a first time in TTI index 1 and re-transmitted in TTI indices 2 to 4 in consecutive re-transmissions of data packets 121, 122, 123. At the end 130 of TTI index 4, the ACK of the eNodeB has been received and re-transmission stops.

Accordingly the second data packet 140 is transmitted for a first time in TTI index 9 and retransmitted in TTI indices 10 to 12 in consecutive re-transmissions of data packets 141, 142, 143. At the end 150 of TTI index 12, the ACK of the eNodeB has been received and re-transmission stops.

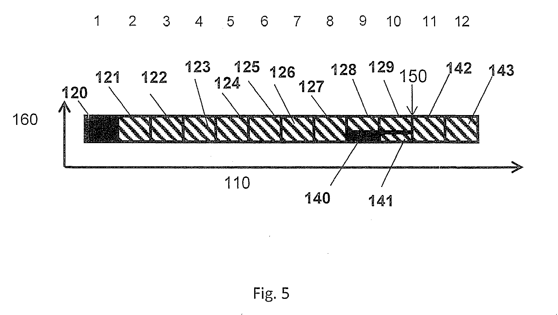

Fig. 5 schematically depicts a further retransmission scheme time flow 110 when a superposed signal is used.

In Fig. 5 along TTI indices 1 to 12 the first data packet 120 is sent a first time in TTI index 1 and re-transmitted in TTI indices 2 to 8 in consecutive re-transmissions of data packets 121 to 127. In TTI index 9 the first transmission of the second data packet 140 is required. As the receipt of the first data packet 120 or its retransmissions has not been acknowledged, a re-transmission packet 128 is superposed with the first transmission of the second data packet 140. The power is indicated in Fig. 5 on axis 160. The power may be split in half between the signals carrying the symbols for the re-transmission and the first transmission. However, as explained above the power used for the first signal may be, e. g. 10 dB, higher.

The first and the second data packet is addressed to the same recipient. In case of an ENB transmitting data to a specific UE, the first data packet is transmitted to the specific UE using its specific UE Id as the destination address, the re-transmissions of the first data packet are also addressed to the specific UE by using its specific UE Id as the destination address, and also the superposed signal including the second data packet is addressed to the specific UE by using its specific UE Id as the destination address.

A re-transmission 141 of the second data packet is superposed with another re-transmission 129 of the first data packet in TTI index 10. At the end 150 of TTI index 10, the ACK of the eNodeB has been received for the first data packet and re-transmission of that data packet stops. Consequently in the TTI indices 11 and 12 only the retransmissions 142 and 143 for the second data packet are sent.

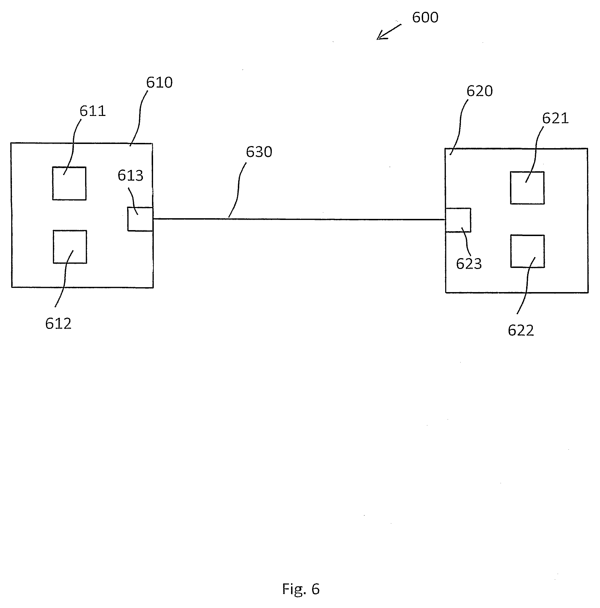

Fig. 6 schematically depicts parts of devices according to the embodiments.

Accordingly UE 610 is a device for wireless data transmission in the radio communications network 600.

UE 610 comprises at least a processor 611, memory 612 and a transceiver 613, and is configured for transmitting the first data package according to the first transmission time interval schedule, retransmitting the representation of the first data package, after transmitting the first data package at the transceiver 613 for the first time, according to the second transmission time interval schedule, until the predetermined condition is met, and without waiting for the receipt of the receiver's acknowledgement of the successful receipt of the first data package or the negative acknowledge of an unsuccessful receipt, transmitting the second data package according to the third transmission time interval schedule, after transmitting the first data package for the first time, by superposing the first signal for re-transmitting symbols representing at least part of the first data package and the second signal for transmitting symbols representing at least part of the second data package to create the superposed signal, and send, if the condition is not met, the superposed signal at least once until the condition is met, wherein the first and second data package are addressed to the same recipient.

The eNodeB 620 is a further device for wireless data transmission in the radio communications network 600, wherein the eNodeB 620 comprises at least a further processor 621, further memory 622 and a further transceiver 623, and is configured for receiving a first data package according to the first transmission time interval schedule, receiving at least one re-transmitted representation of the first data package, after receiving the first data package for the first time and according to the second transmission time interval schedule, sending information about the result of the receipt of the fist data block, addressed to the sender of the first data package, only upon successful receipt of the first data package, receiving a superposed signal, comprising the first signal with symbols representing at least part of the retransmitted first data package, and the second signal with symbols representing at least part of the second data package, wherein the retransmission of the first data package is received according to the second transmission time interval schedule, and wherein the second data package is received according to the third transmission time interval schedule, separating the first signal from the superposed signal, detecting symbols representing at least a part of the retransmitted first data package from the first signal, decoding the detected symbols to recreate the first data package.

The transceivers 613 and 623 are connectable in the example for uplink via a radio communications link 630 according to the aforementioned LTE standard.

The downlink is implemented likewise exchanging the functionality and methods described for UE 610 and eNodeB 620.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the FIGs., including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, other diagrams and the like represent various processes which may be substantially represented in computer readable medium and so executed by a computer or processor, whether or not such computer or processor is explicitly shown.

At least parts of the above described radio communications network including sender or receiver could be implemented using network functions virtualization (NFV). NFV is a network architecture that makes use of technologies of computer virtualization. Entire network equipment like sender or receiver or parts thereof or part of their functions can be virtualized using software building blocks that may connect, or interact, to create communication services. A virtualized network function of e.g. a sender or receiver may include at least one virtual machine running different software and processes, on top of standard high-volume servers, switches and storage, or a cloud computing infrastructure, instead of having customized hardware appliances for each network function. As such a sender or receiver function may be implemented in a computer program using a computer program product embodied on a non-transitory computer readable medium for performing operations, wherein the computer program product comprises instructions, that when executed by a processor, perform the operations of the specific eNodeB or UE function.

## Claims

1. Method for transmitting data transmission in a radio communications network (600), comprising
transmitting (302, 311) a first data package according to a first transmission time interval schedule,
retransmitting (307, 314) a representation of the first data package, after transmitting the first data package for the first time, according to a second transmission time interval schedule, until a condition is met and without waiting for a receipt of a receiver's acknowledgement of the successful receipt of the first data package or the negative acknowledge of an unsuccessful receipt, further comprising transmitting a second data package according to a third transmission time interval schedule, after transmitting the first data package for the first time, by
superposing (306) a first signal for retransmitting symbols representing at least a part of the first data package and a second signal for transmitting symbols representing at least a part of the second data package to create a superposed signal, and
sending (308), if the condition is not met, the superposed signal at least once until the condition is met, wherein the first and the second data package are addressed to the same recipient.

2. The method according to claim 1, wherein the condition is met, when a time interval after transmitting the first data package for the first time passed, or the receipt of a receiver's acknowledgement of the successful receipt of the first data package is detected, whatever condition is met earlier.

3. The method according any of the claims 1 or 2, wherein the first signal has a first power level and the second signal has a second power level, and
wherein the predetermined first power level is between 1 dB and 10 dB, and in particular 1 dB, 3 dB or 10dB higher than the predetermined second power level.

4. The method according to any of the preceding claims, comprising encoding (306) data symbols for transmitting the first data package, retransmitting the first data package or transmitting the second data package with a Fountain code, a linear time encoding code or a Raptor code.

5. The method according to any of the preceding claims, comprising sending the first data package in a first transmission time interval and sending the second data package in a second transmission time interval, wherein retransmission of the first data package starts between the first transmission time interval and the second transmission time interval.

6. The method according to any of the preceding claims, comprising
determining the content of a control message comprising at least one of:
information related to a superposition start time limit,
information related to a retransmission end time limit,
information related to a power-allocation for a transmission and/or re-transmission signal,
information related to a modulation and coding scheme,
instruction to re-transmit a data package identical to the original package or to re-transmit a redundancy version of the original package, and
retransmitting the representation of the first data package dependent on at least one of the received information.

7. A method for receiving data in a radio communications network, comprising
receiving (203, 209) a first data package according to a first transmission time interval schedule, and receiving at least one re-transmitted representation of the first data package, after receiving the first data package for the first time and according to a second transmission time interval schedule,
sending (206, 211) information about the result of the receipt of the first data package, addressed to a sender of the first data package, only upon successful receipt of the first data package,
receiving (203) a superposed signal, comprising a first signal with symbols representing at least part of the re-transmitted first data package, and a second signal with symbols representing at least part of a second data package, wherein the re-transmission of the first data package is received according to the second transmission time interval schedule, and wherein the second data package is received according to a third transmission time interval schedule, separating (203) the first signal from the superposed signal,
detecting (204) symbols representing at least a part of the retransmitted first data package from the first signal,
decoding (206) the detected symbols to recreate the first data package.

8. The method of claim 7, wherein the first signal has a first power level and the second signal has a second power level, and
wherein the first signal is separated from the superposed signal depending on the power level of the first signal and/or the power level of the second signal, or a combination thereof, and wherein the first power level is between 1 dB and 10 dB, in particular 1 dB, 3 dB or 10 dB higher than the second power level.

9. The method according to claims 7 or 8, wherein received symbols of the first data package, or of the superposed first data package and second data package are intermediately stored (204) in a buffer as candidates for supporting a subsequent decoding of the first data package and/or the second data package.

10. The method according to claim 9, wherein symbols stored in the buffer are processed to remove the first signal from the superposed signal by interference cancellation and the second data package is detected from a signal resulting from the signal cancellation.

11. The method according to claim 10, wherein symbols from a plurality of past transmission time intervals are stored in the buffer and used to detect the second signal.

12. The method according to any of claims 7 to 11, comprising
receiving a mission critical service request related to a packet delay budget, in particular of 1 ms, 5 ms, or 10 ms, or a value between 1 ms and 10 ms, and/or a packet error loss rate, in particular of 10⁻⁸, 10⁻⁷ or 10⁻⁶, and/or a predetermined priority level of 0.5 or 0.7 or 1.0 or a value inbetween 0 and 2,
allocating resources for transmitting data in the radio communications network depending on the received service request requirements.

13. The method according to any of claims 7 to 12, comprising
determining a control message comprising at least one of:
information related to a superposition start time limit,
information related to a retransmission end time limit,
information related to a power-allocation for a transmission and/or re-transmission signal,
information related to a modulation and coding scheme,
instruction to re-transmit a data package identical to the original package or to re-transmit a redundancy version of the original package; and
sending the control message addressed to one user equipment (610).

14. A device (610) to transmit data in a radio communications network (600), wherein the device (610) comprises at least a processor (611), memory (612) and a transceiver (613), and is configured to:
transmit a first data package according to a first transmission time interval schedule,
re-transmit a representation of the first data package, after transmitting the first data package for the first time, according to a second transmission time interval schedule, until a condition is met and without waiting for a receipt of a receiver's acknowledgement of the successful receipt of the first data package or the negative acknowledge of an unsuccessful receipt,
transmit a second data package according to a third transmission time interval schedule, after transmitting the first data package for the first time, by
superposing a first signal for re-transmitting symbols representing at least part of the first data package and a second signal for transmitting symbols representing at least part of the second data package to create a superposed signal, and
send, if the condition is not met, the superposed signal at least once until the condition is met, wherein the first and second data package are addressed to the same recipient.

15. The device according to claim 14, further configured to:
determine a control message comprising at least one of:
information related to a superposition start time limit,
information related to a retransmission end time limit,
information related to a power-allocation for a transmission and/or re-transmission signal,
information related to a modulation and coding scheme,
instruction to re-transmit a data package identical to the original package or to re-transmit a redundancy version of the original package,
and to re-transmit the representation of the first data package dependent on at least one of the received information.

16. A device (620) to receive data in a radio communications network (600), wherein the device (620) comprises at least a processor (621), memory (622) and a transceiver (623), and is configured to:
receive a first data package according to a first transmission time interval schedule,
receive at least one re-transmitted representation of the first data package, after receiving the first data package for the first time and according to a second transmission time interval schedule,
send information about the result of the receipt of the fist data block, addressed to a sender (610) of the first data package, only upon successful receipt of the first data package,
receive a superposed signal, comprising a first signal with symbols representing at least part of the retransmitted first data package, and a second signal with symbols representing at least part of a second data package, wherein the re-transmission of the first data package is received according to a second transmission time interval schedule, and wherein the second data package is received according to a third transmission time interval schedule,
separate the first signal from the superposed signal,
detect symbols representing at least a part of the retransmitted first data package from the first signal,
decode the detected symbols to recreate the first data package.

17. The device (620) of claim 16 further configured to determine the content of a control message comprising at least one of:
a superposition start time limit,
a re-transmission end time limit,
information related to power-allocation for a transmission and/or re-transmission signal,
information related to a modulation and coding scheme,
instruction to re-transmission a package identical to the original package or to re-transmit a redundancy version of the original package.

## Amended claims

### Amended claims in accordance with Rule 137(2) EPC.

1. Method for transmitting data transmission in a radio communications network (600), comprising
transmitting (302, 311) a first data package according to a first transmission time interval schedule,
retransmitting (307, 314) a representation of the first data package, after transmitting the first data package for the first time, according to a second transmission time interval schedule, until a condition is met and without waiting for a receipt of a receiver's acknowledgement of the successful receipt of the first data package or the negative acknowledge of an unsuccessful receipt, further comprising
transmitting a second data package according to a third transmission time interval schedule, after transmitting the first data package for the first time, **characterized by**
superposing (306) a first signal for retransmitting symbols representing at least a part of the first data package and a second signal for transmitting symbols representing at least a part of the second data package to create a superposed signal, and
sending (308), if the condition is not met, the superposed signal at least once until the condition is met, wherein the first and the second data package are addressed to the same recipient.

2. The method according to claim 1, wherein the condition is met, when a time interval after transmitting the first data package for the first time passed, or the receipt of a receiver's acknowledgement of the successful receipt of the first data package is detected, whatever condition is met earlier.

3. The method according any of the claims 1 or 2, wherein the first signal has a first power level and the second signal has a second power level, and
wherein the predetermined first power level is between 1 dB and 10 dB, and in particular 1 dB, 3 dB or 10dB higher than the predetermined second power level.

4. The method according to any of the preceding claims, comprising encoding (306) data symbols for transmitting the first data package, retransmitting the first data package or transmitting the second data package with a Fountain code, a linear time encoding code or a Raptor code.

5. The method according to any of the preceding claims, comprising sending the first data package in a first transmission time interval and sending the second data package in a second transmission time interval, wherein retransmission of the first data package starts between the first transmission time interval and the second transmission time interval.

6. The method according to any of the preceding claims, comprising
determining the content of a control message comprising at least one of:
information related to a superposition start time limit,
information related to a retransmission end time limit,
information related to a power-allocation for a transmission and/or re-transmission signal,
information related to a modulation and coding scheme,
instruction to re-transmit a data package identical to the original package or to re-transmit a redundancy version of the original package, and
retransmitting the representation of the first data package dependent on at least one of the received information.

7. A method for receiving data in a radio communications network, comprising
receiving (203, 209) a first data package according to a first transmission time interval schedule, and receiving at least one re-transmitted representation of the first data package, after receiving the first data package for the first time and according to a second transmission time interval schedule,
sending (206, 211) information about the result of the receipt of the first data package, addressed to a sender of the first data package, only upon successful receipt of the first data package, **characterized by**
receiving (203) a superposed signal, comprising a first signal with symbols representing at least part of the re-transmitted first data package, and a second signal with symbols representing at least part of a second data package, wherein the re-transmission of the first data package is received according to the second transmission time interval schedule, and wherein the second data package is received according to a third transmission time interval schedule, separating (203) the first signal from the superposed signal,
detecting (204) symbols representing at least a part of the retransmitted first data package from the first signal,
decoding (206) the detected symbols to recreate the first data package.

8. The method of claim 7, wherein the first signal has a first power level and the second signal has a second power level, and
wherein the first signal is separated from the superposed signal depending on the power level of the first signal and/or the power level of the second signal, or a combination thereof, and wherein the first power level is between 1 dB and 10 dB, in particular 1 dB, 3 dB or 10 dB higher than the second power level.

9. The method according to claims 7 or 8, wherein received symbols of the first data package, or of the superposed first data package and second data package are intermediately stored (204) in a buffer as candidates for supporting a subsequent decoding of the first data package or the second data package.

10. The method according to claim 9, wherein symbols stored in the buffer are processed to remove the first signal from the superposed signal by interference cancellation and the second data package is detected from a signal resulting from the signal cancellation.

11. The method according to claim 10, wherein symbols from a plurality of past transmission time intervals are stored in the buffer and used to detect the second signal.

12. The method according to any of claims 7 to 11, comprising
receiving a mission critical service request related to a packet delay budget, in particular of 1 ms, 5 ms, or 10 ms, or a value between 1 ms and 10 ms, and/or a packet error loss rate, in particular of 10⁻⁸,. 10⁻⁷ or 10⁻⁶, and/or a predetermined priority level of 0.5 or 0.7 or 1.0 or a value inbetween 0 and 2,
allocating resources for transmitting data in the radio communications network depending on the received service request requirements.

13. The method according to any of claims 7 to 12, comprising
determining a control message comprising at least one of:
information related to a superposition start time limit,
information related to a retransmission end time limit,
information related to a power-allocation for a transmission or re-transmission signal,
information related to a modulation and coding scheme,
instruction to re-transmit a data package identical to the original package or to re-transmit a redundancy version of the original package; and
sending the control message addressed to one user equipment (610).

14. A device (610) to transmit data in a radio communications network (600), wherein the device (610) comprises at least a processor (611), memory (612) and a transceiver (613), and is configured to:
transmit a first data package according to a first transmission time interval schedule,
re-transmit a representation of the first data package, after transmitting the first data package for the first time, according to a second transmission time interval schedule, until a condition is met and without waiting for a receipt of a receiver's acknowledgement of the successful receipt of the first data package or the negative acknowledge of an unsuccessful receipt,
transmit a second data package according to a third transmission time interval schedule, after transmitting the first data package for the first time, **characterized by**
superposing a first signal for re-transmitting symbols representing at least part of the first data package and a second signal for transmitting symbols representing at least part of the second data package to create a superposed signal, and
send, if the condition is not met, the superposed signal at least once until the condition is met, wherein the first and second data package are addressed to the same recipient.

15. The device according to claim 14, further configured to:
determine a control message comprising at least one of:
information related to a superposition start time limit,
information related to a retransmission end time limit,
information related to a power-allocation for a transmission and/or re-transmission signal,
information related to a modulation and coding scheme,
instruction to re-transmit a data package identical to the original package or to re-transmit a redundancy version of the original package,
and to re-transmit the representation of the first data package dependent on at least one of the received information.

16. A device (620) to receive data in a radio communications network (600), wherein the device (620) comprises at least a processor (621), memory (622) and a transceiver (623), and is configured to:
receive a first data package according to a first transmission time interval schedule,
receive at least one re-transmitted representation of the first data package, after receiving the first data package for the first time and according to a second transmission time interval schedule,
send information about the result of the receipt of the fist data block, addressed to a sender (610) of the first data package, only upon successful receipt of the first data package, **characterized in that** the transceiver (623) is configured to
receive a superposed signal, comprising a first signal with symbols representing at least part of the retransmitted first data package, and a second signal with symbols representing at least part of a second data package, wherein the re-transmission of the first data package is received according to a second transmission time interval schedule, and wherein the second data package is received according to a third transmission time interval schedule,
separate the first signal from the superposed signal,
detect symbols representing at least a part of the re-transmitted first data package from the first signal,
decode the detected symbols to recreate the first data package.

17. The device (620) of claim 16 further configured to determine the content of a control message comprising at least one of:
a superposition start time limit,
a re-transmission end time limit,
information related to power-allocation for a transmission and/or re-transmission signal,
information related to a modulation and coding scheme,
instruction to re-transmission a package identical to the original package or to re-transmit a redundancy version of the original package.
